# EUROPEAN PATENT SPECIFICATION

(11) **EP 0 678 444 B1**
(45) Date of publication and mention of the grant of the patent: **18.11.1998**
(21) Application number: 95302569.9
(22) Date of filing: 18.04.1995
(51) Int. Cl.: B62L 3/02

(54) **A braking device for bicycles**
Fahrradbremsvorrichtung
Dispositif de freinage pour bicyclettes

(30) Priority: 22.04.1994 JP 84216/94
(43) Date of publication of application: 25.10.1995
(73) Proprietor: SHIMANO INC., Osaka 590 (JP)
(72) Inventor: Okajima, Shinpei, Sakai-shi, Osaka (JP); Sugimoto, Masanori, Sakai-shi, Osaka (JP); Yamashita, Kazuhisa, Sakai-shi, Osaka (JP)
(74) Representative: Pacitti, Pierpaolo A.M.E.

(56) References cited:
- DE-A- 3 923 176
- DE-U- 9 203 082
- FR-A- 1 349 334
- PATENT ABSTRACTS OF JAPAN vol. 17 no. 288 (M-1423) ,3 June 1993 & JP-A-05 016865 (SHIMANO INC) 26 January 1993,

## Description

### BACKGROUND OF THE INVENTION

The present invention is directed to braking devices for bicycles and, more particularly, to a braking device which is constructed so that the operating force of the brake lever can be varied as the brake lever is pulled.

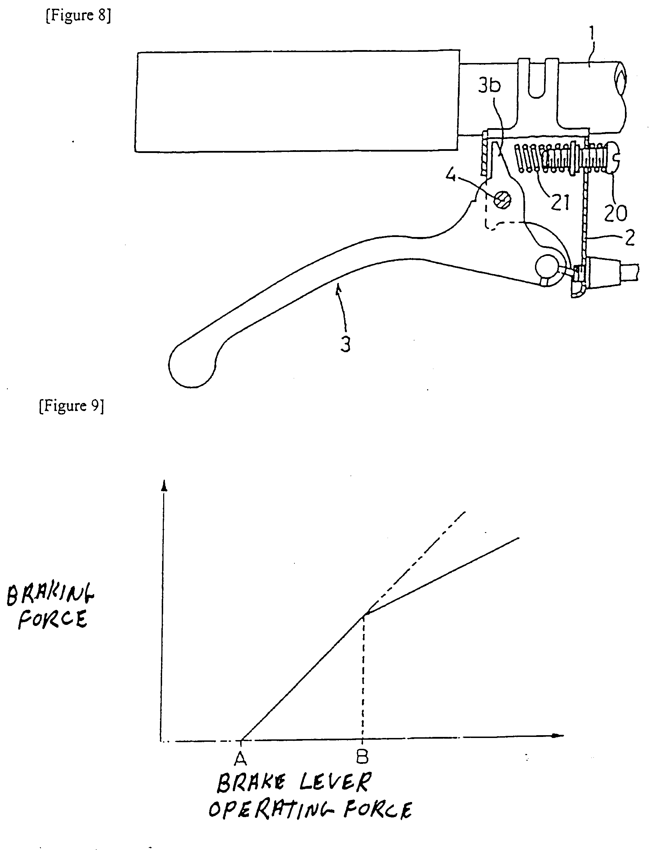

A conventional bicycle brake is shown Fig. 8. As shown therein, a brake lever (3) is mounted via a pivot shaft (4) in a manner which allows said brake lever to pivot on a lever bracket (2) which is fastened to a handle-bar (1). Furthermore, a coil spring (21), one end of which is free, is attached to the aforementioned lever bracket (2) via a bolt (20), so that when the brake lever (3) is pulled, an extension part (3b) extending from said brake lever (3) contacts the free end of the aforementioned coil spring (21) after the brake lever (3) has pivoted through a fixed stroke.

In this conventional braking device, as shown in Figure 9, the resistance to operation of the brake lever (3) increases when the brake lever (3) is pulled through the fixed stroke so that the extension part (3b) contacts the coil spring (21). As a result, a larger operating force is required for any subsequent operation of the brake lever (3), so that the cyclist is able to sense the operating stroke of the brake lever (3).

In the above mentioned conventional braking device, as shown in Figure 9, the slope of the operating force of the brake lever (3) vs. the braking force only slightly changes in the vicinity of the operating point (B) where the extension part (3b) of the brake lever (3) contacts the coil spring (21). Under normal operating conditions, the increased force can be sensed, and the cyclist may control the operation of the brake lever accordingly. However, in an emergency, the cyclist may unintentionally grasp the brake lever with a strong force, and in such cases there is a possibility that excessive braking force is applied so that wheel locking occurs. The prior art device is described in JP A 501865, and forms the basis for the preamble of the independent claims.

### SUMMARY OF THE INVENTION

The present invention is directed to a bicycle braking device which ordinarily operates with a light operating force but which helps to prevent wheel locking even when the cyclist grasps the brake lever with a strong force. In general, the braking device is equipped with a resistance element which acts so that, when the brake device is operated by pulling a brake lever to a set operating position where the wheel braking force produced by brake shoes reaches a certain set value, a discretely increased force resists operation of the brake lever so that further operation of said brake lever is inhibited until a pulling force which is greater than the resistance force is thereafter applied to the brake lever.

The invention provides a brake for a bicycle according to claims 1 and 25 as well as a method of operating a bicycle brake according to claim 26.

In one preferred embodiment of the present invention, a brake lever is pivotally mounted to a mounting member, and a resistance means is disposed between the lever and the mounting member. The resistance means discretely increases resistance to movement of the lever when the lever moves to a desired position so that further movement of the lever is inhibited until a desired force is applied to the lever. In this embodiment, the brake lever is pivotally mounted to a lever bracket through a pivot shaft so that a grip part of the brake lever extends from the pivot shaft in one direction and an extension part extends from the pivot shaft in another direction. A resistance element is disposed between the extension part of the brake lever and mounting member. The resistance element comprises rod having first and second portions. An abutment is disposed on the first portion for receiving a first end of a coil spring, and the second end of the rod extends past the mounting member so that a second end of the coil spring is received by the mounting member. The coil spring is precompressed so that, when the extension part contacts the resistance element, the resistance element instantly increases resistance to movement of the lever in a step-wise manner so that further movement of the lever is inhibited until a desired force is applied to the lever. The amount of precompression of the coil spring may be adjusted to suit different riders.

In another preferred embodiment of the invention, a stepped surface is disposed on one of the lever or the mounting member, and an engaging member is coupled to the other one of the lever or mounting member. A portion of the engaging member moves along the stepped surface so that contact between the step and the engaging member resists further movement of the lever.

In another preferred embodiment of the present invention, the brake lever is mounted to the mounting member at a mounting location and is adapted both to pivot about the mounting location and to move linearly relative to the mounting location. The brake lever includes a grip portion extending from the mounting location, and a resistance element is located so that the brake lever pivots about the mounting location until the resistance element contacts an engaging member, and thereafter the lever pivots about the point of contact between the resistance element and the engaging member. A distance between the point of contact of the resistance element and the engaging member to the grip portion of the brake lever in a direction perpendicular to the grip portion of the brake lever is greater than a distance between the mounting location and the grip portion of the brake lever in a direction perpendicular to the grip portion of the brake lever. Consequently, the torque applied to the brake lever instantly decreases when the brake lever begins to pivot about the point of contact between the resistance element and the engaging member.

### BRIEF DESCRIPTION OF THE DRAWINGS

Fig. 1 is a partially cut-away plan view illustrating a first embodiment of a bicycle brake device according to the present invention;
Fig. 2 is a partially cut-away plan view which similarly illustrates the first embodiment of the bicycle brake according to the present invention;
Fig. 3 is a graph illustrating the braking performance of the bicycle brake device shown in Figs. 1 and 2;
Fig. 4 is a partially cut-away plan view illustrating another embodiment of a bicycle brake device according to the present invention;
Fig. 5 is a graph illustrating the braking performance of the bicycle brake device shown in Fig. 4;
Fig. 6 is a partially cut-away plan view illustrating another embodiment of a bicycle brake device according to the present invention;
Fig. 7 is a partially cut-away plan view illustrating another embodiment of a bicycle brake device according to the present invention;
Fig. 8 is a partially cut-away plan view illustrating a conventional bicycle brake device; and
Fig. 9 is a graph illustrating the braking performance of the bicycle brake device shown in Fig. 8.

### DETAILED DESCRIPTION OF THE EMBODIMENTS

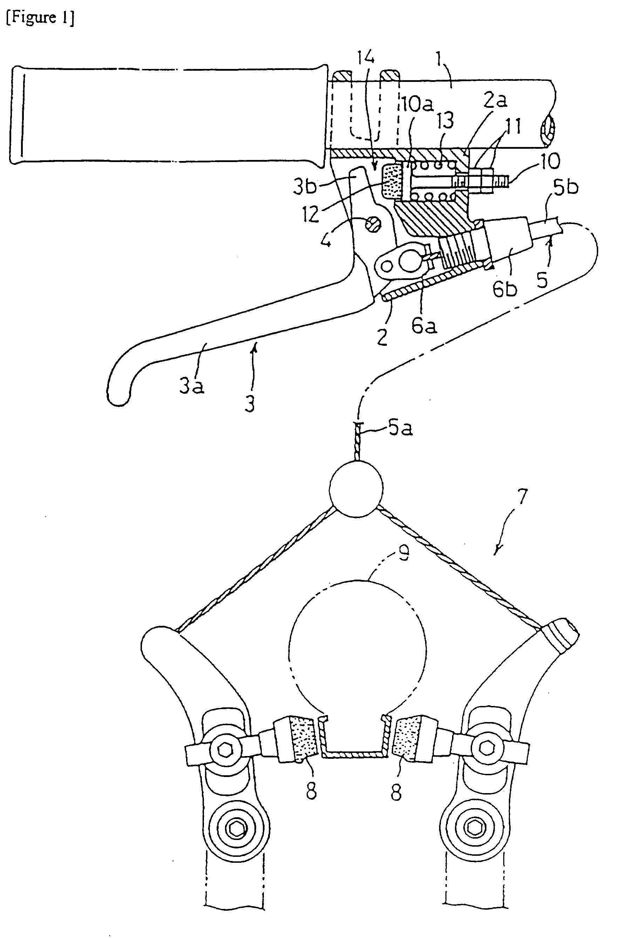

A first embodiment of a bicycle braking device according to the present invention will be described with reference to Figure 1. As shown therein, a lever bracket (2) for the brake lever is attached to the handle-bar (1) of the bicycle, and a brake lever (3) is mounted on the lever bracket (2) by means of a pivot shaft (4) so that the brake lever (3) is free to pivot. An attachment part (6a) which is used to attach one end of the inner wire (5a) of the brake wire (5) to the brake lever (3) is pivot-mounted on the brake lever (3) in a position located further toward the grip part (3a) of the brake lever (3) than the pivot shaft (4). An attachment part (6b) for the outer wire (5b) of the brake wire (5) is screw-attached to the lever bracket (2).

The other end of the inner wire (5a) attached to the inner-wire attachment part (6a) is coupled to an ordinary cantilever brake (7). When the grip part (3a) of the brake lever (3) is gripped and the brake lever (3) is pulled, the brake shoes (8) of the cantilever brake (7) press against both sides of the rim of the rear wheel (9) of the bicycle so that a braking force is applied to the rear wheel (9). Afterward, when the brake lever (3) is released, the brake lever (3) is elastically returned to its original position in the same manner as in a conventional braking device by a return spring (not shown) installed on the cantilever brake (7) or a return spring installed on the brake lever (3), etc.

A cylindrical body (2a) which is closed at one end is formed as an integral part of the lever bracket (2), and a rod-form body (10) which has a male screw part formed at one end is positioned inside this cylindrical body (2a). The male screw part of this rod-form body (10) is passed through a through-holed formed in the bottom of the cylindrical body (2a) so that the male screw parts extends to the outside, and a nut member (11) is screwed onto this male screw part. A flange (10a) is formed as an integral part of the rod-form body (10) on the other end of the rod-form body (10), and a contact member (12) which consists of a wear-resistant material is fastened to the flange (10a). Furthermore, a coil spring (13) which is mounted around the outside of the rod-form body (10) is interposed in a compressed state between the flange (10a) and the bottom of the cylindrical body (2a), so that the contact member (12) is elastically driven toward the open end of the cylindrical body (2a).

An extension part (3b) used for pushing is formed as an integral extension of the brake lever (3) on the opposite side of the pivot shaft (4) from the grip part (3), so that when the brake lever (3) is gripped and pulled, the extension part (3b) contacts the contact member (12) after the brake lever (3) is pivoted through a fixed stroke, thus temporarily preventing further pivoting of the brake lever (3). In other words, as will be described in detail later, the pivoting operation of the brake lever (3) is temporarily prevented by the action of a resistance means (14) consisting of the rod-form body (10) and coil spring (13), etc.

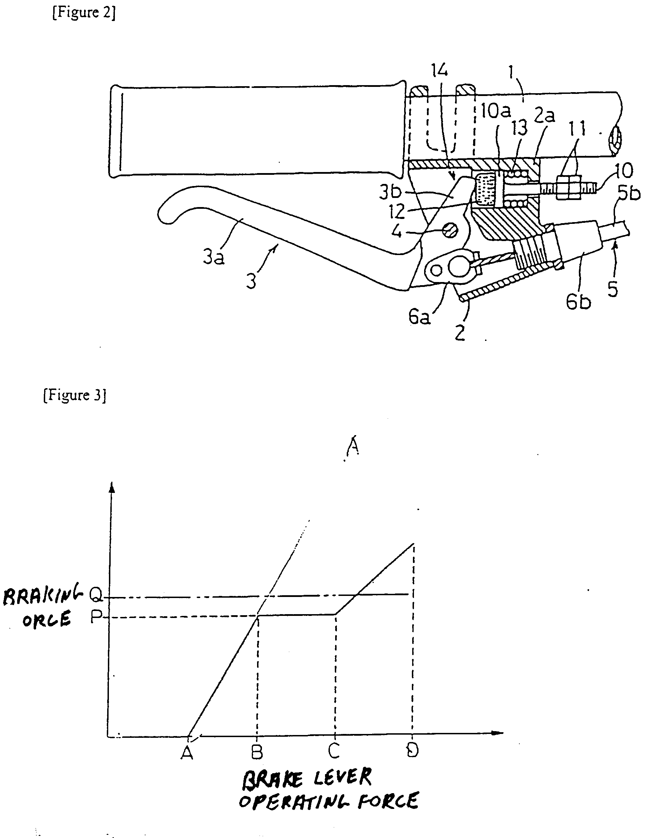

When the grip part (3a) of the brake lever (3) is grasped and pulled, the operating force of the brake lever (3) is transmitted to the cantilever brake (7) via the inner wire (5a), so that the brake shoes (8) move toward the sides of the rim of the rear wheel (9) in the same manner as in an ordinary braking device. In the initial state of so-called "empty pulling", almost no operating force is required until the brake shoes (8) contact the rim of the wheel. However, as is shown in Figure 3, the operating force gradually increases beginning at operating point (A), where the brake shoes (8) contact the rim, and the braking force increases in proportion to the operating force. As the brake lever (3) is pulled even further, the extension part (3b) of the brake lever (3) contacts the contact member (12) of the resistance means (14), so that operating point (B) shown in Figure 3 is reached.

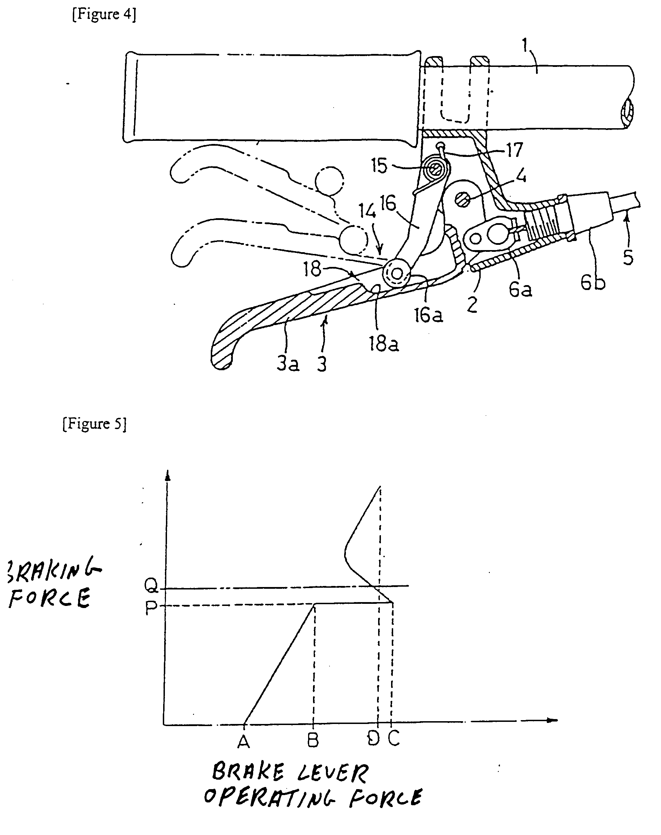

The coil spring (13) is not installed in a fully extended free state, but is instead installed in a preloaded state with a load of approximately 3 kilograms to 8 kilograms applied. Accordingly, even if an attempt is made to pull the brake lever (3) further from the position of operating point (B), the operating force merely increases without causing any pivoting of the brake lever (3). As a result, the braking force remains level as shown in Figures 3 and 5. When operating point (C) is reached where the operating force applied to the brake lever (3) is increased to such an extent that the operating force overcomes the preloading of the coil spring (13), the coil spring (13) is elastically deformed (as shown in Figure 2) as a result of being clamped between the extension part (3b) of the brake lever (3) and the bottom of the cylindrical body (2a) on the lever bracket side. Thus, the brake lever (3) again begins to pivot. Subsequently, the braking force increases in proportion to the increase in the operating force, until the stroke end (D) is reached.

Specifically, when the brake lever (3) is pulled as far as a set operating position (B) where the braking force applied by the brake shoes (8) reaches a certain set value (P), any further increase in the braking force is temporarily made impossible by the action of the resistance means (14). However, if an operating force sufficient to overcome the preloading of the coil spring (13) is subsequently applied to the brake lever (3), the coil spring (13) is elastically deformed so that it begins to bend. In other words, the resistance action of the resistance means (14) is released, so that the braking force increases beyond the set value (P). In this case, if the set value (P) is set at a value which is slightly lower than the locking braking force value (Q) at which the wheel locks, the system can be designed so that the brake lever (3) can be operated by means of an extremely light force.

To describe this in detail, it is desirable to be able to operate the brake lever (3) with as light a force as possible. However, if the required operating force is merely decreased, the braking force will exceed the locking braking force value (Q) in cases where the brake lever (3) is unintentionally pulled with an excessively strong force, thus resulting in an extremely dangerous situation. Thus, the braking device of the present invention is designed so that there is a region where the braking force remains constant at the set value (P) while only the operating force of the brake lever (3) increases as indicated by the region extending from operating point (B) to operating point (C) in Figure 3. Accordingly, by setting this set value (P) at a value which is slightly lower than the locking braking force value (Q), and setting the preloading value at an appropriate value, it is possible to prevent the braking force from suddenly reaching the locking braking force value (Q), even if (for example) the force required in order to operate the brake lever (3) in the region extending from operating point (A) to operating point (B) is greatly reduced. Furthermore, since most braking is performed with a braking force which is less than the locking braking force value (Q), safe braking which is suited to actual conditions can be achieved. Even so, there may be cases in which a braking force greater than the locking braking force value (Q) is required. In such cases, a rather large operating force is required; nevertheless, a braking force exceeding the locking braking force value (Q) can be reliably obtained by applying an operating force exceeding that shown at operating point (C).

The above mentioned locking braking force value (Q) is influenced by the physical build of the cyclist, and especially by the cyclist's body weight. Adjustments can be made for this by increasing or decreasing the extension of the brake wire (5). It would also be possible to deal with this problem by installing a multiple number of coil springs (13) with different elastic modulus values or lengths (e. g., one spring for use by children, one for use by adults, one for use by women, etc.), and selecting the appropriate spring from this multiple number of springs.

The preloading value of the coil spring (13) is ordinarily in the range of 3 kilograms to 8 kilograms; however, this is also influenced by the strength of the cyclist's grip, etc. Accordingly, the preloading value can be adjusted to suit individual cyclists by adjusting the nut member (11), and depending on the case, it might also be possible to replace the coil spring (13) with a more appropriate coil spring.

Fig. 4 illustrates a second embodiment of a bicycle brake device according to the present inventio. As in the first embodiment, a lever bracket (2) is fastened to the handle-bar (1) of the bicycle, and a brake lever (3) is mounted on the lever bracket (2) by means of a pivot shaft (4) so that the brake lever (3) is free to pivot. An attachment part (6a) for the inner wire (5a) is pivot-mounted on the brake lever (3) in a position located further toward the grip part (3a) of the brake lever (3) than the pivot shaft (4), and an attachment part (6b) for the outer wire (5b) is screw-attached to the lever bracket (2). Furthermore, as in the first embodiment, the brake lever (3) is coupled to a cantilever brake (not shown) by the inner wire (5a), so that braking can be accomplished by pulling the brake lever (3).

This second embodiment differs from the first embodiment in terms of the concrete structure of the resistance means (14). In this second embodiment, another pivot shaft (15) is mounted on the lever bracket (2) in a location closer to the handle-bar (1) than the pivot shaft (4), and a pivoting arm (16) is attached to the pivot shaft (15) so that the pivoting arm (16) is free to pivot. A rotating roller (16a) is attached to the free end of this pivoting arm (16) so that the roller (16) is free to rotate, and this rotating roller (16) is elastically driven by a torsion coil spring (17) interposed between the pivoting arm (16) and lever bracket (2), so that the roller (16) is maintained in contact with the inside surface of the brake lever (3). Meanwhile, a cam surface (18) which has a resistance step part (18a) is formed on the inside surface of the brake lever (3), so that a resistance means (14) is constituted by this cam surface (18), the pivoting arm (16) and rotating roller (16a), and the spring (17), etc.

In this second embodiment, as in the first embodiment, the braking force increases in proportion to the operating force in the region extending from operating point (A) to the set operating position (B) (following "empty pulling"), as is shown in Figure 5. This set operating position (B) is the position where the rotating roller (16a) reaches the resistance step part (18a) of the cam surface (18) of the brake lever (3) (as indicated by the imaginary lines in Figure 4) after rolling across the cam surface (18) during the pulling operation of the brake lever (3). Even if an attempt is made to pull the brake lever (3) further, the operating force merely increases without any pivoting of the brake lever (3); accordingly, the braking force is maintained at the set value (P).

Afterward, if the operating force is further increased so that operating point (C) is reached, the rotating roller (16) slips over the resistance step part (18a) (as indicated by the imaginary lines in Figure 4) so that the brake lever (3) reaches the stroke end (D). In this second embodiment, the resistance means (14) consisting of the rotating roller (16a) and cam surface (18), etc., produces an effect similar to that obtained in the first embodiment.

There are some slight differences between the two embodiments. Specifically, in the case of the first embodiment, as is seen from Figure 3, the operating force at the stroke end (D) is clearly larger than the operating force at operating point (C); furthermore, since force is required for the elastic deformation of the coil spring (13) in the region extending from operating point (C) to the stroke end (D), the slope of the curve shown in Figure 3 is somewhat gentler in the region extending from operating point (C) to the stroke end (D) than it is in the region extending from operating point (A) to the set operating position (B).

In the second embodiment, on the other hand, there is no great resistance to the pulling operation of the brake lever (3) once the rotating roller (16a) has ridden over the resistance step part (18a) of the cam surface (18) (although the spring (17) does have some slight effect). Accordingly, as is seen from Figure 5, the slope in the region extending from operating point (A) to the set operating position (B) and the slope in the region extending from operating point (C) to the stroke end (D) are more or less the same, and are ultimately positioned on roughly the same line. Furthermore, depending on how the resistance force created by the rotating roller (16a) and resistance step part (18a) is set, the operating force at the stroke end (D) may be smaller than the operating force at operating point (C) (as shown in Figure 5).

In the above embodiments, a cantilever brake (7) was described as an example of the brake used. However, there are no particular restrictions on the brake itself; a hand brake, coaster brake or any of various other types of brakes may also be used.

In the first embodiment described above, the cylindrical body (2a) was formed as an integral part of the lever bracket (2) from the same material as the lever bracket (2). However, it would also be possible to form the cylindrical body (2a) separately from the lever bracket (2). Furthermore, in addition to forming the cylindrical body (2a) as a separate part, it would also be possible to construct the cylindrical body (2a) so that it can slide relative to the bracket (2), and so that it can be fixed in place as desired, thus making it possible to alter the stroke of the brake lever (3) to the operating point (B). Moreover, the elastic body (13) is not limited to a coil spring. Various other types of elastic bodies could be used; for example, the elastic body (13) could be formed from ordinary rubber, or a part combining rubber and a spring, etc., could be used.

In the second embodiment as well, various mechanisms for providing a temporary resistance to the brake lever (3) could be used besides the above mentioned rotating roller (16a) and resistance step part (18a); for example, a projection with an elastic protruding/withdrawing action could be utilized, etc.

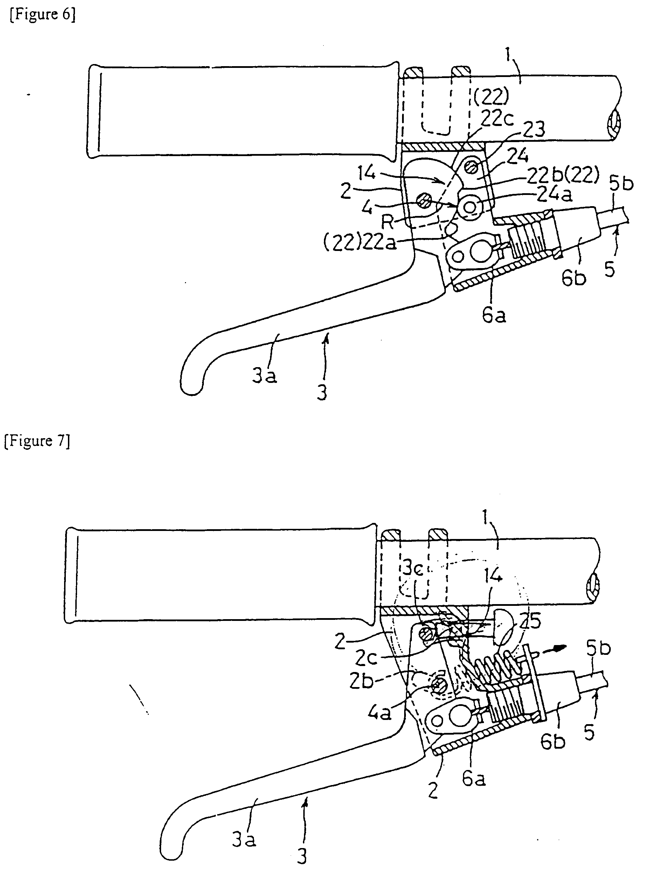

Further embodiments of a bicycle brake device are shown in Figs. 6 and 7. In each embodiment, a resistance means (14) offers a braking performance similar to that obtained in the first embodiment illustrated in Figure 3.

In the embodiment shown in Figure 6, a brake lever (3) is mounted on a lever bracket (2) by means of a pivot shaft (4) so that the brake lever (3) is free to pivot, and a cam surface (22) is formed as an integral part of the brake lever (3) near the pivot shaft (4). This cam surface (22) consists of (a) a circular-arc-form first cam surface (22a) which has a constant radius of R centered on the pivot shaft (4), (b) an involute-curve-form third cam surface (22c) whose distance from the pivot shaft (4) is greater than the constant radius R, with the distance from the pivot shaft (4) showing a gradual increase, and (c) a projection-form second cam surface (22b) which connects the cam surfaces (22a) and (22c).

A pivoting member (24) is mounted on the lever bracket (2) by means of a pivot shaft (23) which is separate from the pivot shaft (4) of the brake lever (3), so that the pivoting member (24) is free to pivot. The outer wire (5b) of the brake wire is attached to an attachment part (6b) which is screw-fastened to the pivoting member (24), so that the pivoting member (24) is driven toward the cam surface (22) in a pivoting motion about the pivot shaft (23) by the reaction force of the outer wire (5b). Furthermore, a roller (24a) which contacts the cam surface (22) and acts as a cam follower is pivot-mounted on the pivoting member (24) so that the roller (24a) is free to rotate. Accordingly, a resistance means (14) is constituted by the pivoting part (24) (including the roller (24a)), the cam surface (22) and the outer wire (5b) which drives the pivoting part (24).

In this embodiment, the roller (24a) moves along the first cam surface (22a) of the cam surface (22) during so-called "empty pulling", and during the period in which the operating force gradually increases from operating point (A) where the brake shoes (8) contact the rim. Accordingly, there is no particular pivoting motion of the pivoting member (24), and the braking force increases in proportion to the pulling operation of the brake lever (3). When the brake lever (3) is pulled even further, the second cam surface (22b) formed on the brake lever (3) contacts the roller (24a) so that operating point (B) shown in Figure 3 is reached.

A preloading force which causes the pivoting member (24) mounting the roller (14a) to pivot toward the cam surface (22) acts on the pivoting member (24) as a result of the reaction force of the outer wire (5b). Furthermore, the second cam surface (22b) is formed so that it projects abruptly outward from the first cam surface (22a). As a result, even if an attempt is made to pull the brake lever (3) further from the position of operating point (B), the operating force merely increases without causing any pivoting of the brake lever (3). Accordingly, the braking force remains level. When the operating force applied to the brake lever (3) is further increased so that the roller (24a) rides over the top of the second cam surface (22b), i. e., when operating point (C) in Figure 3 is reached, the brake lever (3) again begins to pivot. At the same time, the third cam surface (22c) causes forcible pivoting of the pivoting member (24) via the roller (24a) in the opposite direction from the brake lever (3), so that the stroke end (D) is reached.

The embodiment shown in Figure 7 is also a structure in which a brake lever (3) is mounted on a lever bracket (2) by means of a pivot shaft (4a) so that the brake lever (3) is free to pivot; in this structure, however, the pivot shaft (4a) is engaged in a slot (2b) formed in the lever bracket (2), so that the pivot shaft (4a) can move along the slot (2b). Furthermore, the pivot shaft (4a) is elastically driven in the direction indicated by the arrow in Figure 7 by a coil spring (25). In addition, a projecting pin (3c) which can engage with a recess (2c) formed in the lever bracket (2) is installed on the brake lever (3). Accordingly, a resistance means (14) is constituted by the above mentioned recess (2c), pin (3c), slot (2b) and pivot shaft (4a), etc.

In this separate embodiment as well, the brake lever (3) pivots about the pivot shaft (4a) during so-called "empty pulling", and during the period in which the operating force gradually increases from operating point (A) where the brake shoes (8) contact the rim. Accordingly, the braking force increases in proportion to the pulling operation of the brake lever (3). When the braking lever (3) is pulled even further, the projecting pin (3c) installed on the brake lever (3) engages with the recess (2b) formed in the lever bracket (2), so that operating point (B) shown in Figure 3 is reached.

Accordingly, the brake lever (3), which has been pivoting about the pivot shaft (4a) up to this point, suddenly begins to pivot about the pin (3c). As a result, the lever ratio changes abruptly so that a large operating force is required. Accordingly, even if an attempt is made to pull the brake lever (3) further from this operating point (B), the operating force merely increases without causing any pivoting of the brake lever (3), so that the braking force remains level. In this case, if a preloading force is applied to the coil spring (25) which elastically drives the pivot shaft (4a), an even larger operating force will be required. However, even if such a preloading force is not applied, the desired object can be obtained as a result of the abrupt change in the lever ratio.

Subsequently, when the operating force applied to the brake lever (3) is further increased so that operating point (C) is reached, the brake lever (3) pivots about the pin (3c), and the pivot shaft (4a) also begins to pivot together with the brake lever (3), so that the stroke end (D) is reached. Thus, braking performance such as that shown in Figure 3 can also be obtained using the resistance means (14) shown in Figures 6 and 7. Furthermore, various other structures could also be employed.

The foregoing embodiments share a number of advantages. When the wheel braking force reaches a certain set value, any further increase in said braking force is temporarily prevented, with a further increase in the braking force being possible only if an operating force which exceeds a certain set force is applied to the brake lever. Accordingly, instead of a slight change in the slope in the vicinity of the operating point (B), as seen in the conventional case illustrated in Figure 9, the braking force remains constant at a certain set value (P) as shown in Figures 3 and 5, so that a region is created in which only the operating force of the brake lever increases from the operating point (B) to point (C). Consequently, if the operating force at the operating point (C) is appropriately set, sudden wheel locking can be prevented even in cases where the cyclist grasps the brake lever with a strong force all at once.

In the case of normal braking operation, the brakes are almost always operated with a force that is considerably less than the force that would cause wheel locking. Thus, if the set value (P) is set at a value which is slightly lower than the braking force that causes wheel locking, wheel locking can be avoided even if the brake lever operating force required in order to reach the operating point (B) is greatly reduced. In such a case, safe braking operation can be accomplished using a light operating force and, if necessary, a braking force greater than the set value (P) can be obtained by applying an operating force exceeding that indicated at the operating point (C).

By constructing the resistance means from a preloaded elastic body, it is possible to obtain a resistance means which has a complicated action by means of a relatively simple structure. Furthermore, by making the preloading applied to the elastic body adjustable, it is possible not only to deal with changes in elasticity caused by deterioration of the elastic body, but also to adjust the device so that it can be used under optimal conditions in accordance with the grasping force applied by various individual cyclists. In cases where the device is constructed so that (a) the elastic body consists of a coil spring, (b) the adjustment part consists of a nut member, (c) a rod-form body which is mounted inside the coil spring is passed through the lever bracket in such a manner that said rod-form body can move freely through said lever bracket, (d) the coil spring is mounted between (i) a contact member (which contacts the brake lever) installed on one end of the rod-form body, and (ii) the lever bracket, and (e) the nut member is screw-engaged with the other end of the rod-form body passed through the lever bracket, the structure obtained is relatively simple, and all of the above mentioned mechanisms can be mounted in a compact manner on the lever bracket.

## Claims

1. A brake for a bicycle comprising:
a brake lever (3) pivotally mounted to a mounting member (2); and
resistance means (14) disposed between the lever (3) and the mounting member (2) for increasing resistance to movement of the lever (3) when the lever moves to a desired position, and wherein in use, the minimum force required to move said brake lever to said desired position has a first value (B);
characterised in that the resistance means (14) is adapted to inhibit further motion of the lever (3) beyond said desired position until a force with at least a second value (C), discretely greater than said first value, is applied to said lever (3), and wherein said inhibition of motion ceases or is reduced when the force applied to said lever exceeds the second value (C).

2. The brake according to Claim 1 wherein the resistance means (14) comprises a resistance element (10a, 12, 13, 18, 22) coupled to one of the lever (3) or the mounting member (2) which contacts an engaging member (16a, 24a) coupled to the other one of the lever or mounting member so that such contact resists further movement of the lever beyond the desired position.

3. The brake according to Claim 2 wherein the resistance element comprises a preloaded resistance member (13).

4. The brake according to Claim 3 further comprising preload adjusting means (11) for adjusting the preload of the resistance member (13).

5. The brake according to any preceding claim wherein the resistance element comprises a spring (13).

6. The brake according to Claim 5 wherein the resistance element comprises a precompressed coil spring (13).

7. The brake according to any of Claims 2 to 6 wherein the brake lever (3) is pivotally mounted to a lever bracket (2) through a pivot shaft (4) so that a grip part (3a) of the brake lever (3) extends from the pivot shaft in one direction and an extension part (3b) extends from the pivot shaft in another direction, wherein the engaging member is disposed on the extension part, and wherein the resistance element (10a, 12, 13) is mounted to the lever bracket (2).

8. The brake according to Claim 2 wherein the resistance element comprises a stepped surface (18, 22), and wherein the engaging member (16a, 24a) moves along the stepped surface as the brake lever is moved so that a step (18a, 22a) resists further movement of the brake lever.

9. The brake according to Claim 8 further comprising a moveable member (16, 24) having a first portion movably coupled to one of the brake lever (3) or the mounting member (2) and a second portion coupled to one of the stepped surface or the engaging member so that the moveable member (16, 24) moves as the engaging member (16a, 24a) moves along the stepped surface.

10. The brake according to Claim 9 wherein the brake lever (3) is pivotally coupled to a lever bracket (2) through a first pivot shaft (4) so that a grip part (3a) of the brake lever extends from the first pivot shaft (4) in one direction and an extension part extends from the second pivot shaft in another direction, and wherein the moveable member (24) is pivotally coupled to the lever bracket (2) through a second pivot shaft (23).

11. The brake according to Claim 10 wherein the stepped surface (22) is disposed on the extension part of the brake lever and the engaging member (24a) is disposed on the moveable member (24).

12. The brake according to any one of Claims 9 to 11 wherein the engaging member (24a) comprises a roller rotatably coupled to the second portion of the moveable member (24).

13. The brake according to Claim 9 wherein the brake lever is pivotally coupled to a lever bracket (2) through a first pivot shaft (4) so that a grip part of the brake lever extends from the first pivot shaft (4), and wherein the moveable member (16a) is pivotally coupled to the lever bracket through a second pivot shaft (15).

14. The brake according to Claim 13 wherein the stepped surface (18) is disposed on the grip part (3a) of the brake lever (3) and the engaging member (16a) is disposed on the moveable member (16).

15. The brake according to either of Claims 13 or 14 wherein the engaging member comprises a roller rotatably mounted to the second portion of the moveable member (16).

16. The brake according to Claim 15 further comprising a spring (17) disposed between the moveable member (16) and the lever bracket (2).

17. The brake according to Claim 16 wherein the spring comprises a coil spring (17) disposed about the second pivot shaft (15).

18. The brake according to Claim 2, wherein the brake lever (3) is mounted to the mounting member (2) at a mounting location and is adapted both to pivot about the mounting location and to move linearly relative to the mounting location, wherein the brake lever includes a grip portion (3a) extending from the mounting location, and wherein the resistance element is located so that the brake lever pivots about the mounting location (4a) until the resistance element contacts the engaging member (3c), and thereafter the lever pivots about the point of contact between the resistance element and the engaging member (3c).

19. The brake according to Claim 18 wherein a distance between the point of contact of the resistance element and the engaging member (3c) to the grip portion (3b) of the brake lever (3) in a direction perpendicular to the grip portion of the brake lever is greater than a distance between the mounting location (4a) and the grip portion (3b) of the brake lever (3) in a direction perpendicular to the grip portion of the brake lever.

20. The brake according to either of Claims 18 or 19 further comprising a spring (25), disposed between the brake lever (3) and mounting member (2) for further increasing resistance to movement of the brake lever when the brake lever pivots about the point of contact between the resistance element and the engaging member (3c).

21. The brake according to Claim 19 wherein a first pivot shaft (4a) is mounted to the brake lever, the first pivot shaft (4a) being disposed within a slot (2b) formed within the mounting member (2) at the mounting location so that the brake lever pivots about the first pivot shaft (4a) until the engaging member (3c) contacts the resistance element, and thereafter the first pivot shaft (4a) moves linearly within the slot (2b).

22. The brake according to Claim 21 comprising a spring (25) disposed between the first pivot shaft and mounting member (2) for further increasing resistance to movement of the brake lever (3) when the brake lever pivots about the point of contact between the resistance element and the engaging member (3c).

23. The brake according to either of Claims 21 or 22 wherein the engaging member comprises a second pivot shaft (3c) coupled to an extension portion of the brake lever, and wherein the resistance member comprises an abutment disposed on the mounting member (2).

24. The brake according to Claim 23 wherein the abutment includes a recess for receiving the second pivot shaft.

25. A brake for a bicycle comprising:
a brake lever (3) pivotally mounted to a mounting member (2); and
resistance means (14), disposed between the lever (3) and the mounting member (2), characterized in that the resistance means (14) increases resistance to movement of the lever in a step-wise manner when the lever (3) moves to a desired position, so that further movement of the lever is inhibited until a desired force (C) is applied to the lever, wherein the step-wise manner is such that the increased resistance prevents additional movement of the lever (3) beyond the desired position when the force applied to the lever is less than the desired force (C).

26. A method of operating a bicycle brake having a brake lever (3) coupled to a mounting member (2) comprising the steps of:
moving the brake lever (3) to apply a braking force;
increasing resistance to movement of the lever (3) when the lever (3) moves to a desired position, wherein the minimum force required to move the lever to the desired position has a first value (B), characterised in the steps of inhibiting further motion of the lever beyond said desired position until a force with at least a second value (C), discretely greater than said first value (B) is applied to said lever, and reducing or ceasing said inhibition of motion of the brake lever when the force applied to the lever exceeds the second value (C).

## Patentansprüche

1. Eine Bremse für ein Fahrrad bestehend aus:
einem drehbar an einem Befestigungsteil (2) befestigten Bremshebel (3); und
einem zwischen dem Hebel (3) und dem Befestigungsteil (2) angebrachten Widerstandsmittel (14), das Widerstand gegen die Bewegung des Hebels (3) ausübt, wenn der Hebel in eine gewünschte Stellung bewegt wird und wobei im Betrieb der zum Bewegen des Bremshebels in diese gewünschte Stellung erforderliche Minimaldruck einen ersten Wert (B) hat;
dadurch gekennzeichnet, daß der Widerstandsteil (14) dazu ausgelegt ist, eine diese gewünschte Stellung überschreitende weitere Bewegung des Hebels (3) zu verhindern, bis ein Druck mit zumindest einem zweiten Wert (C), der ein wenig größer als der erste Wert ist, auf den Hebel (3) ausgeübt wird, und wobei diese Verhinderung der Bewegung beendet oder reduziert wird, wenn der auf den Hebel ausgeübte Druck größer als der zweite Wert (C) ist.

2. Bremse nach Anspruch 1, wobei das Widerstandsmittel (14) aus einem Widerstandselement (10a, 12, 13, 18, 22) besteht, das mit dem Hebel (3) oder dem Befestigungsteil (2) verbunden ist, und mit einem Eingriffsteil (16a, 24a), der mit dem unverbundenen Hebel oder Befestigungsteil in Berührung kommt, so daß diese Berührung einer diese gewünschte Stellung überschreitenden weiteren Bewegung des Hebels widersteht.

3. Bremse gemäß Anspruch 2, wobei das Widerstandselement einen vorbelasteten Widerstandsteil (13) einschließt.

4. Bremse gemäß Anspruch 3, die weiterhin eine Vorbelastungseinstellvorrichtung (11) zur Einstellung der Vorbelastung des Widerstandsteils (13) einschließt.

5. Bremse gemäß einem der vorhergehenden Ansprüche, wobei das Widerstandselement eine Feder (13) einschließt.

6. Bremse gemäß Anspruch 5, wobei das Widerstandselement eine vorkomprimierte Wickelfeder (13) einschließt.

7. Bremse gemäß einem der Ansprüche 2 bis 6, wobei der Bremshebel (3) mittels einer feststehenden Drehachse (4) an einer Hebelstütze (2) drehbar befestigt ist, so daß eine Grifffläche (3a) des Bremshebels (3) sich in eine Richtung von der feststehenden Drehachse aus erstreckt und ein Ansatz (3b) sich in eine andere Richtung von der feststehenden Drehachse aus erstreckt, wobei der Eingriffsteil auf dem Ansatz und der Widerstandsteil (10a, 12, 13) auf der Hebelstütze (2) angebracht sind.

8. Bremse gemäß Anspruch 2, wobei das Widerstandselement eine gestufte Fläche (18, 22) umfaßt und wobei der Eingriffsteil (16a, 24a) sich entlang der gestuften Fläche bewegt, wenn der Bremshebel bewegt wird, so daß eine Stufe (18a, 22a) einer weiteren Bewegung des Bremshebels widersteht.

9. Bremse gemäß Anspruch 8, die weiter einen beweglichen Teil (16, 24) umfaßt, der einen mit dem Bremshebel (3) oder dem Befestigungsteil (2) bewegbar verbundenen ersten Abschnitt und einen mit der gestuften Fläche oder dem Eingriffsteil verbundenen zweiten Abschnitt aufweist, so daß der bewegliche Teil (16, 24) sich bewegt, wenn der Eingriffsteil (16a, 24a) sich über die gestufte Fläche bewegt.

10. Bremse gemäß Anspruch 9, wobei der Bremshebel (3) mittels einer ersten feststehenden Drehachse (4) mit einer Hebelstütze (2) drehbar verbunden ist, so daß die Grifffläche (3a) des Bremshebels sich in eine Richtung von der ersten feststehenden Drehachse (4) aus erstreckt und ein Ansatz sich in eine andere Richtung von der zweiten feststehenden Drehachse aus erstreckt, und wobei der bewegliche Teil (24) mittels einer zweiten feststehenden Drehachse (23) drehbar mit der Hebelstütze (2) verbunden ist.

11. Bremse gemäß Anspruch 10, wobei die gestufte Fläche (22) auf dem Ansatz des Bremshebels und der Eingriffsteil (24a) auf dem beweglichen Teil (24) angebracht sind.

12. Bremse gemäß einem der Ansprüche 9 bis 11, wobei der Eingriffsteil (24a) eine mit dem zweiten Abschnitt des beweglichen Teils (24) drehbar verbundene Walze umfaßt.

13. Bremse gemäß Anspruch 9, wobei der Bremshebel mittels einer ersten feststehenden Drehachse (4) mit einer Hebelstütze (2) drehbar verbunden ist, so daß die Grifffläche des Bremshebels sich von der ersten feststehenden Drehachse (4) aus erstreckt, und wobei der bewegliche Teil (16a) mittels einer zweiten feststehenden Drehachse (15) mit der Hebelstütze drehbar verbunden ist.

14. Bremse gemäß Anspruch 13, wobei die gestufte Fläche (18) auf der Grifffläche (3a) des Bremshebels (3) und der Eingriffsteil (16a) auf dem beweglichen Teil (16) angebracht sind.

15. Bremse gemäß Anspruch 13 oder 14, wobei der Eingriffsteil eine auf dem zweiten Abschnitt des beweglichen Teils (16) drehbar montierte Walze aufweist.

16. Bremse gemäß Anspruch 15, die weiter eine zwischen dem beweglichen Teil (16) und der Hebelstütze (2) angebrachte Feder (17) aufweist.

17. Bremse gemäß Anspruch 16, wobei die Feder eine um die zweite feststehende Drehachse (15) angebrachte Wickelfeder (17) aufweist.

18. Bremse gemäß Anspruch 2, wobei der Bremshebel (3) an der Montagestelle auf dem Befestigungsteil (2) befestigt ist und dazu ausgelegt ist, sich um die Montagestelle und bezüglich der Montagestelle linear zu bewegen, wobei der Bremshebel eine Grifffläche (3a) umfaßt, die sich von der Montagestelle aus erstreckt, und wobei das Widerstandselement so plaziert ist, daß der Bremshebel sich um die Montagestelle (4a) dreht, bis das Widerstandselement mit dem Eingriffsteil (3c) in Berührung kommt und anschließend der Hebel sich um den Berührungspunkt zwischen dem Widerstandselement und dem Eingriffsteil (3c) dreht.

19. Bremse gemäß Anspruch 18, wobei eine Distanz zwischen dem Berührungspunkt des Widerstandselements und des Eingriffsteils (3c) zur Grifffläche (3b) des Bremshebels (3) in einer bezüglich der Grifffläche des Bremshebels lotrechten Richtung größer ist als eine Distanz zwischen der Montagestelle (4a) und der Grifffläche (3b) des Bremshebels (3) in einer bezüglich der Grifffläche des Bremshebels lotrechten Richtung.

20. Bremse gemäß Anspruch 18 oder 19, die weiter eine zwischen dem Bremshebel (3) und dem Befestigungsteil (2) angebrachte Feder (25) umfaßt, um den Widerstand gegen eine weitere Bewegung des Bremshebels zu erhöhen, wenn der Bremshebel sich um den Berührungspunkt zwischen dem Widerstandselement und dem Eingriffsteil (3c) dreht.

21. Bremse gemäß Anspruch 19, wobei eine erste feststehende Drehachse (4a) auf dem Bremshebel befestigt ist, wobei die erste feststehende Drehachse (4a) innerhalb eines Schlitzes (2b), der innerhalb des Befestigungsteils (2) an der Montagestelle gebildet wird, plaziert ist, so daß der Bremshebel sich um die erste feststehende Drehachse (4a) dreht bis der Eingriffsteil (3c) mit dem Widerstandselement in Berührung kommt und anschließend die erste feststehende Drehachse (4a) sich innerhalb des Schlitzes (2b) linear bewegt.

22. Bremse gemäß Anspruch 21, die eine zwischen der ersten feststehenden Drehachse und dem Befestigungsteil (2) angebrachte Feder (25) aufweist, die dazu dient, den Widerstand gegen die Bewegung des Bremshebels (3) zu erhöhen, wenn der Bremshebel sich um den Berührungspunkt zwischen dem Widerstandselement und dem Eingriffsteil (3c) dreht.

23. Bremse gemäß Anspruch 21 oder 22, wobei der Eingriffsteil eine zweite feststehende Drehachse (3c) umfaßt, die mit dem Ansatz des Bremshebels verbunden ist, und wobei der Widerstandsteil ein auf dem Befestigungsteil (2) angebrachtes Widerlager aufweist.

24. Bremse gemäß Anspruch 23, wobei das Widerlager eine Aussparung zur Aufnahme der zweiten feststehenden Drehachse aufweist.

25. Bremse für ein Fahrrad bestehend aus:
einem drehbar auf einem Befestigungsteil (2) angebrachten Bremshebel (3); und
einem zwischen dem Hebel (3) und dem Befestigungsteil (2) angebrachten Widerstandsmittel (14), dadurch gekennzeichnet, daß das Widerstandsmittel (14) den Widerstand gegen Bewegung des Hebels stufenweise erhöht, wenn der Hebel (3) in eine gewünschte Stellung bewegt wird, damit eine weitere Bewegung des Hebels verhindert wird, bis ein gewünschter Druck (C) auf den Hebel ausgeübt wird, wobei die stufenweise Widerstandserhöhung derart ist, daß der erhöhte Widerstand eine die gewünschte Stellung überschreitende weitere Bewegung des Hebels (3) verhindert, wenn der auf den Hebel ausgeübte Druck weniger ist als der gewünschte Druck (C).

26. Verfahren zur Betätigung einer Fahrradbremse, die einen auf einem Befestigungsteil (2) angebrachten Bremshebel (3) aufweist, das aus den folgenden Schritten besteht:
den Bremshebel (3) betätigen, um eine Bremskraft auszuüben;
den Widerstand gegen die Bewegung des Hebels (3) zu erhöhen, wenn der Hebel (3) in eine gewünschte Stellung bewegt wird, wobei der zum Bewegen des Hebels in die gewünschte Stellung benötigte Minimaldruck einen ersten Wert (B) hat, durch die Schritte gekennzeichnet, daß eine diese gewünschte Stellung überschreitende weitere Bewegung des Hebels verhindert wird, bis ein Druck mit zumindest einem zweiten Wert (C), der ein wenig größer als der erste Wert (B) ist, auf den Hebel ausgeübt wird, und die Verhinderung der Bewegung des Bremshebels reduziert oder beendet wird, wenn der auf den Hebel ausgeübte Druck den zweiten Wert (C) überschreitet.

## Revendications

1. Un frein pour une bicyclette comprenant:
une poignée de frein (3) montée de façon pivotante sur un élément de montage (2); et
un moyen de résistance (14) disposé entre la poignée (3) et l'élément de montage (2) pour augmenter la résistance au mouvement de la poignée (3) lorsque la poignée bouge vers une position désirée, et dans lequel à l'usage, la force minimale remise pour faire bouger ladite poignée de frein vers ladite position désirée a une première valeur (B);
caractérisé en ce que le moyen de résistance (14) est adapté pour interdire toute motion supplémentaire de la poignée (3) au delà de ladite position désirée jusqu'à ce qu'une force avec au moins une seconde valeur (C), légèrement plus grande que ladite première valeur, soit appliquée à ladite poignée (3), et dans lequel ladite interdiction de motion cesse ou est réduite lorsque la force appliquée à ladite poignée dépasse la seconde valeur (C).

2. Le frein selon la revendication 1 dans lequel le moyen de résistance (14) comprend un élément de résistance (10a, 12, 13, 18, 22) accouplé soit à la poignée (3) soit à l'élément de montage (2) qui entre en contact avec un élément d'engagement (16a, 24a) accouplé soit à la poignée soit à l'élément de montage restant de manière à ce qu'un tel contact résiste à tout mouvement supplémentaire de la poignée au delà de la position désirée.

3. Le frein selon la revendication 2 dans lequel l'élément de résistance comprend un élément de résistance préchargé (13).

4. Le frein selon la revendication 3 comprenant en outre des moyens d'ajustement pré-chargés (11) pour ajuster la charge d'étalonnage de l'élément de résistance (13).

5. Le frein selon l'une quelconque des revendications précédentes dans lequel l'élément de résistance comprend un ressort (13).

6. Le frein selon la revendication 5 dans lequel l'élément de résistance comprend un ressort hélicoïdal pré-compressé (13).

7. Le frein selon l'une quelconque des revendications 2 à 6 dans lequel la poignée de frein (3) est montée de façon pivotante sur un support de poignée (2) à travers un arbre à pivot (4) de sorte qu'une pièce à agripper (3a) de la poignée de frein (3) s'étend à partir de l'arbre à pivot dans une direction et une pièce d'extension (3b) s'étend à partir de l'arbre à pivot dans une autre direction, dans lequel l'élément d'engagement est placé sur la pièce d'extension, et dans lequel l'élément de résistance (10a, 12, 13) est monté sur le support de poignée (2).

8. Le frein selon la revendication 2 dans lequel l'élément de résistance comprend une surface échelonnée (18, 22), et dans lequel l'élément d'engagement (16a, 24a) bouge le long de la surface échelonnée alors que la poignée de frein bouge de sorte qu'un gradin (18a, 22a) résiste à tout mouvement supplémentaire de la poignée de frein.

9. Le frein selon la revendication 8 comprenant en outre un élément mobile (16, 24) ayant une première portion accouplée de façon mobile soit à la poignée de frein (3) soit à l'élément de montage (2) et une seconde portion accouplée soit à la surface échelonnée soit à l'élément d'engagement de sorte que l'élément mobile (16, 24) bouge lorsque l'élément d'engagement (16a, 24a) bouge le long de la surface échelonnée.

10. Le frein selon la revendication 9 dans lequel la poignée de frein (3) est accouplée de façon pivotante à un support de poignée (2) par un premier arbre à pivot (4) de sorte qu'une pièce à agripper (3a) de la poignée de frein s'étende à partir du premier arbre à pivot (4) dans une direction et une pièce d'extension s'étende à partir du second arbre à pivot dans une autre direction, et dans lequel l'élément mobile (24) est accouplé de façon pivotante au support de poignée (2) par un second arbre à pivot (23).

11. Le frein selon la revendication 10 dans lequel la surface échelonnée (22) est placée sur la pièce d'extension de la poignée de frein et l'élément d'engagement (24a) est placé sur l'élément mobile (24).

12. Le frein selon l'une quelconque des revendications 9 à 11 dans lequel l'élément d'engagement (24a) comprend un roulement accouplé de façon rotative à la seconde portion de l'élément mobile (24).

13. Le frein selon la revendication 9 dans lequel la poignée de frein est accouplée de façon pivotante au support de poignée (2) par un premier arbre à pivot (4) de sorte que la pièce à agripper de la poignée de frein s'étende à partir du premier arbre à pivot (4), et dans lequel l'élément mobile (16a) est accouplé de façon pivotante au support de poignée par un second arbre à pivot (15).

14. Le frein selon la revendication 13 dans lequel la surface échelonnée (18) est placée sur la pièce à agripper (3a) de la poignée de frein (3) et l'élément d'engagement (16a) est placé sur l'élément mobile (16).

15. Le frein selon l'une ou l'autre des revendications 13 ou 14 dans lequel l'élément d'engagement comprend un roulement monté de façon rotative sur la seconde portion de l'élément mobile (16).

16. Le frein selon la revendication 15 comprenant en outre un ressort (17) placé entre l'élément mobile (16) et le support de poignée (2).

17. Le frein selon la revendication 16 dans lequel le ressort comprend un ressort hélicoïdal (17) placé autour du second arbre à pivot (15).

18. Le frein selon la revendication 2, dans lequel la poignée de frein (3) est montée sur l'élément de montage (2) à une position de montage et est adaptée à la fois pour pivoter autour de la position de montage et pour bouger de façon linéaire par rapport à la position de montage, dans lequel la poignée de frein comprend une pièce à agripper (3a) s'étendant à partir de la position de montage, et dans lequel l'élément de résistance est situé de sorte que la poignée de frein pivote autour de la position de montage (4a) jusqu'à ce que l'élément de résistance entre en contact avec l'élément d'engagement (3c), et ensuite la poignée pivote autour du point de contact entre l'élément de résistance et l'élément d'engagement (3c).

19. Le frein selon la revendication 18 dans lequel une distance entre le point de contact de l'élément de résistance et de l'élément d'engagement (3c) et la pièce à agripper (3b) de la poignée de frein (3) dans une direction perpendiculaire à la pièce à agripper de la poignée de frein est plus grande qu'une distance entre la position de montage (4a) et la pièce à agripper (3b) de la poignée de frein (3) dans une direction perpendiculaire à la pièce à agripper de la poignée de frein.

20. Le frein selon l'une quelconque des revendications 18 ou 19 comprenant en outre un ressort (25), placé entre la poignée de frein (3) et l'élément de montage (2) pour augmenter encore plus la résistance au mouvement de la poignée de frein lorsque la poignée de frein pivote autour du point de contact entre l'élément de résistance et l'élément d'engagement (3c).

21. Le frein selon la revendication 19 dans lequel un premier arbre à pivot (4a) est monté sur la poignée de frein, le premier arbre à pivot (4a) étant placé à l'intérieur d'une fente (2b) formée à l'intérieur de l'élément de montage (2) à la position de montage de sorte que la poignée de frein pivote autour du premier arbre à pivot (4a) jusqu'à ce que l'élément d'engagement (3c) entre en contact avec l'élément de résistance, et ensuite le premier arbre à pivot (4a) bouge de façon linéaire à l'intérieur de la fente (2b).

22. Le frein selon la revendication 21 comprenant un ressort (25) placé entre le premier arbre à pivot et l'élément de montage (2) pour augmenter encore plus la résistance au mouvement de la poignée de frein (3) lorsque la poignée de frein pivote autour du point de contact entre l'élément de résistance et l'élément d'engagement (3c).

23. Le frein selon l'une ou l'autre des revendications 21 ou 22 dans lequel l'élément d'engagement comprend un second arbre à pivot (3c) accouplé à une portion d'extension de la poignée de frein, et dans lequel l'élément de résistance comprend une butée placée sur l'élément de montage (2).

24. Le frein selon la revendication 23 dans lequel la butée comprend un défoncement pour recevoir le second arbre à pivot.

25. Un frein pour une bicyclette comprenant:
une poignée de frein (3) montée de façon pivotante sur un élément de montage (2); et
un moyen de résistance (14), placé entre la poignée (3) et l'élément de montage (2), caractérisé en ce que le moyen de résistance (14) augmente la résistance au mouvement de la poignée d'une manière échelonnée lorsque la poignée (3) bouge vers une position désirée, de sorte à interdire tout mouvement supplémentaire de la poignée jusqu'à ce qu'une force désirée (C) soit appliquée à la poignée, dans lequel la façon échelonnée est telle que l'augmentation de la résistance empêche tout mouvement supplémentaire de la poignée (3) au delà de la position désirée lorsque la force appliquée à la poignée est plus petite que la force désirée (C).

26. Un procédé pour faire fonctionner un frein de bicyclette ayant une poignée de frein (3) accouplée à un élément de montage (2) comprenant les étapes consistant à:
bouger la poignée de frein (3) pour appliquer une force de freinage;
augmenter la résistance au mouvement de la poignée (3) lorsque la poignée (3) bouge vers une position désirée, dans lequel la force minimale requise pour bouger la poignée vers la position désirée a une première valeur (B), caractérisé par les étapes consistant à interdire encore plus la motion de la poignée au delà de ladite position désirée jusqu'à ce qu'une force avec au moins une seconde valeur (C), légèrement plus grande que ladite première valeur (B) soit appliquée à ladite poignée, et à réduire ou cesser ladite interdiction de motion de la poignée de frein lorsque la force appliquée à la poignée dépasse la seconde valeur (C).
